# EUROPÄISCHE PATENTSCHRIFT

(11) **EP 2 525 060 B1**
(45) Veröffentlichungstag und Bekanntmachung des Hinweises auf die Patenterteilung: **22.07.2020**
(21) Anmeldenummer: 12001784.3
(22) Anmeldetag: 16.03.2012
(51) Int. Cl.: F01N 11/00, F01N 3/10, F01N 3/023, F02D 41/40, F02D 41/30, F01N 3/02, F01N 13/00

(54) **VERFAHREN UND VORRICHTUNG ZUR ÜBERPRÜFUNG DER FUNKTIONSFÄHIGKEIT, INSBESONDERE DER OXIDATIONSFÄHIGKEIT, EINES IN DER ABGASLEITUNG EINER MIT LUFTÜBERSCHUSS BETRIEBENEN BRENNKRAFTMASCHINE VERBAUTEN NO-OXIDATIONSKATALYSATORS**
METHOD AND DEVICE FOR TESTING THE FUNCTIONALITY, IN PARTICULAR THE OXIDATION CAPACITY OF AN NO OXIDATION CATALYTIC CONVERTER INSTALLED IN THE WASTE GAS LINE OF A COMBUSTION ENGINE OPERATED WITH EXCESS AIR
PROCÉDÉ ET DISPOSITIF DE VÉRIFICATION DE LA CAPACITÉ DE FONCTIONNEMENT, EN PARTICULIER DE LA CAPACITÉ D'OXYDATION, D'UN CATALYSEUR D'OXYDATION NO INTÉGRÉ DANS UNE CONDUITE DE GAZ D'ÉCHAPPEMENT D'UN MOTEUR À COMBUSTION ENTRAÎNÉ AVEC UN EXCÈS D'AIR

(30) Priorität: 19.05.2011 DE 102011102008
(43) Veröffentlichungstag der Anmeldung: 21.11.2012
(73) Patentinhaber: MAN Truck & Bus SE, 80995 München (DE)
(72) Erfinder: Döring, Andreas, 82008 München (DE)
(74) Vertreter: Liebl, Thomas

(56) Entgegenhaltungen:
- EP-A1- 2 031 207
- WO-A1-99/25965
- DE-A1- 10 135 759
- DE-A1- 10 148 128
- DE-A1- 10 333 337
- DE-A1-102004 050 628
- DE-A1-102008 049 098
- DE-A1-102008 057 814
- DE-A1-102009 000 148

## Beschreibung

Die Erfindung betrifft ein Verfahren zur Überprüfung der Funktionsfähigkeit, insbesondere der Oxidationsfähigkeit, eines in der Abgasleitung einer mit Luftüberschuss betriebenen Brennkraftmaschine verbauten NO-Oxidationskatalysators gemäß dem Oberbegriff des Anspruchs 1. Ferner betrifft die Erfindung eine Vorrichtung zur Überprüfung der Funktionsfähigkeit, insbesondere der Oxidationsfähigkeit, eines in der Abgasleitung einer mit Luftüberschuss betriebenen Brennkraftmaschine verbauten NO-Oxidationskatalysators gemäß dem Oberbegriff des Anspruchs 15.

Es ist allgemein bekannt, dass, bei mit Luftüberschuss betriebenen Brennkraftmaschinen, katalytisch arbeitende Nachbehandlungssysteme, wie zum Beispiel NOₓ-Speicherkatalysatoren, SCR-Katalysatoren oder Partikelfilter eingesetzt werden, um die gesetzlich vorgeschriebenen Abgasgrenzwerte einhalten zu können. All diesen System ist gemein, dass Stickstoffdioxid (NO₂) ein wichtiger Bestandteil der an den Nachbehandlungssystem ablaufenden Reaktionen darstellt. Dieses Stickstoffdioxid wird anhand, meist platinhaltiger, NO-Oxidationskatalysatoren mit Hilfe des im Abgas enthaltenen Sauerstoffs aus dem vom Motor emittierten Stickstoffmonoxid gebildet:

2NO + O₂ ↔2NO₂

Im realen Motorbetrieb stellt allerdings die Verschwefelung dieser NO-Oxidationskatalysatoren durch den im Kraftstoff und/oder im Motorenöl enthaltenen Schwefel ein erhebliches Problem dar. Durch die Verbrennung bildet sich aus diesem Schwefel SO₂, das an den NO-Oxidationskatalysatoren gemäß den nachstehenden Gleichungen zu SO₃ oxidiert wird:

S + O₂ →SO₂

2SO₂ + O₂ → SO₃

Dabei hat es sich gezeigt, dass die Menge an gebildetem SO₃ und die Menge an gebildetem NO₂ in einem direkten Zusammenhang zueinander stehen, nämlich dergestalt, dass ein NO-Oxidationskatalysator, der in an sich erwünschter Weise große Mengen an NO₂ bildet, zugleich in unerwünschter Weise große Mengen an SO₃ erzeugt. Dieses SO₃ bildet mit dem metallhaltigen Katalysator-Washcoat Sulfate oder mit Wasser-Schwefelsäure, die auf der Oberfläche des Katalysators physiosorbiert werden. Beides führt zu einer Abdeckung der aktiven Zentren des Katalysators und damit zu einem Rückgang von dessen Aktivität.

Aus diesem Grund ist es notwendig, den aktuellen Zustand eines NO-Oxidationskatalysators und damit dessen Oxidationsfähigkeit zu überprüfen bzw. zu überwachen.

Von Drei-Wege-Katalysatoren ist ein Verfahren bekannt, deren Sauerstoffeinspeicherfähigkeit mit Hilfe von periodischen Schwingungen zwischen magerem und fettem Motorbetrieb und der Beobachtung der Reaktion des Katalysators mit Hilfe einer stromab angebrachten Lambdasonde zu ermitteln, und zwar dergestalt, dass im Falle einer gedämpften Amplitude der Restsauerstoffschwingung der Katalysator noch eine Sauerstoffeinspeicherfähigkeit besitzen soll, während er anderenfalls nicht mehr in der Lage sein soll, Sauerstoff aufzunehmen (DE 10 2004 009 615 B4). Dieses Verfahren kann aus zwei Gründen bei NO-Oxidationskatalysatoren nicht angewendet werden: Zum einen besitzen diese Katalysatoren keine ausgeprägte Sauerstoffspeicherfähigkeit, und zum anderen lassen sich die üblicherweise mager betriebenen dieseleinspritzenden oder direkt einspritzenden Ottomotoren nicht ohne weiteres fett betreiben. So steigen hierbei sowohl die Rußemissionen als auch die thermische Belastung der Motoren in unerwünschter Weise extrem an.

Bei sogenannten Dieseloxidationskatalysatoren, die zur Oxidation von unverbrannten Kohlenwasserstoffen und Kohlenmonoxid dienen, wird ein zweites Verfahren angewandt: Hier wird periodisch die Kohlenwasserstoffoxidation, meist durch eine späte Nacheinspritzung von Kraftstoff in den Brennraum angehoben und die Exothermie der Oxidation dieser Kohlenwasserstoffe am Dieseloxidationskatalysator mit Hilfe von Thermoelementen bestimmt. Der detektierte Temperaturanstieg wird mit einem Erwartungswert, der aus der zugegebenen Kohlenwasserstoffmenge ermittelt wird, verglichen. Weichen Mess- und Erwartungswert zu stark voneinander ab, kann auf eine Schädigung des Dieseloxidationskatalysators geschlossen werden (EP 1 373 693 B2). Der Nachteil dieses Verfahrens besteht darin, dass große Mengen Kohlenwasserstoffe zugegeben werden müssen, da andernfalls, aufgrund der großen thermischen Massen und des dadurch bedingten geringen Temperaturanstiegs, keine Reaktion des Systems beobachtet werden kann. Dies führt zu einer deutlichen Verschlechterung des Wirkungsgrades der Brennkraftmaschine und damit zu einem Verbrauchsanstieg. Ein weiterer Nachteil ist in der hohen thermischen Belastung des Katalysators zu sehen, der bei den NO-Oxidationskatalysatoren, wie bereits oben beschrieben, zu einer Schädigung desselben führen kann. Speziell bei in Fahrzeugen verbauten Brennkraftmaschinen ergibt sich aufgrund stark wechselnder Umgebungsbedingungen und der dadurch bedingt schwankenden Temperaturverluste der Abgasanlage zudem das Problem, dass die Detektion der Temperatur einem großen Messfehler unterliegen kann.

Aus der EP 1 936 140 A1 ist bereits ein Verfahren zur Überwachung eines Abgasnachbehandlungssystems einer Brennkraftmaschine bekannt, bei dem stromaufwärts des Abgasnachbehandlungssystems eine erste Lambda-Sonde zur Erfassung des Luftverhältnisses angeordnet wird und bei dem weiter stromabwärts des Abgasnachbehandlungssystems eine zweite Lambda-Sonde zur Erfassung des Luftverhältnisses angeordnet wird. Zur Überprüfung der Funktionsfähigkeit des Abgasnachbehandlungssystems wird die Brennkraftmaschine in einen Betrieb überführt, in dem die aus den Zylindern abgeführten Abgase eine derart hohe Konzentration an unverbrannten Kohlenwasserstoffen aufweisen, dass die erste Sonde fehlerhaft arbeitet, und zwar dergestalt, dass diese erste Sonde ein, im Vergleich zu dem tatsächlich im Abgas vorliegenden Luftverhältnis, höheres Luftverhältnis anzeigt, wobei von einer Funktionsuntüchtigkeit des Abgasnachbehandlungssystems ausgegangen wird, falls die beiden Luftverhältnisse im Wesentlichen gleich groß sind. DE 10 2009 000 148 A1 sowie DE 10 2008 049 098 A1 offenbaren weitere Diagnoseverfahren von Oxidationskatalysatoren, indem eine Alterung abhängig von der verbleibenden Oxidationsfähigkeit bestimmt wird. In DE 103 33 337 A1 wird die verbleibende Sauerstoffspeicherfähigkeit ermittelt.

Demgegenüber ist es Aufgabe der vorliegenden Erfindung, ein Verfahren und eine Vorrichtung zur Überprüfung der Funktionsfähigkeit, insbesondere der Oxidationsfähigkeit, eines in der Abgasleitung einer mit Luftüberschuss betriebenen Brennkraftmaschine verbauten NO-Oxidationskatalysators zu schaffen, das auf einfache Weise mit hoher Funktionssicherheit auch bei niedrigen Temperaturen des Abgasstroms zuverlässig durchgeführt werden kann.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Verfahren zur Überprüfung der Funktionsfähigkeit, insbesondere der Oxidationsfähigkeit, eines in der Abgasleitung einer mit Luftüberschuss betriebenen Brennkraftmaschine verbauten NO-Oxidationskatalysators vorgeschlagen, bei dem erfindungsgemäß für die Überprüfung der Funktionsfähigkeit des NO-Oxidationskatalysators eine definierte Menge Kohlenmonoxid als Reduktionsmittel stromauf des NO-Oxidationskatalysators zugegeben und/oder erzeugt wird, welches Kohlenmonoxid am NO-Oxidationskatalysator mit Hilfe des im Abgasstrom stromauf des NO-Oxidationskatalysators enthaltenen Sauerstoffes oxidiert wird. Die durch die Oxidation des zugegebenen bzw. erzeugten Kohlenmonoxids bedingte Änderung des Sauerstoffgehaltes im Abgasstrom innerhalb und/oder stromab des NO-Oxidationskatalysators wird als Sauerstoff-Istwert erfasst und/oder ermittelt und mit einem vorgegebenen Sauerstoff-Sollwert verglichen, wobei bei einer definierten Abweichung des Sauerstoff-Istwertes von dem Sauerstoff-Sollwert auf eine verschlechterte Funktionsfähigkeit des NO-Oxidationskatalysators geschlossen wird, und zwar insbesondere dergestalt, dass eine Fehlermeldung erzeugt und/oder ausgegeben wird.

Mit einer derartigen erfindungsgemäßen Verfahrensführung lässt sich die Funktionsfähigkeit eines NO-Oxidationskatalysators auf einfache und funktionssichere Weise überprüfen, da die Verringerung des Sauerstoffgehaltes des Abgasstroms mit Hilfe eines zum Beispiel stromab bzw. innerhalb des Katalysators angebrachten Sensors, zum Beispiel einer Lambda-Sonde, auf einfache Weise erfasst und bestimmt werden kann. Dieser wird dann mit dem Sauerstoff-Sollwert als Erwartungswert verglichen. Der Sauerstoff-Sollwert ist bevorzugt eine Funktion der Katalysatortemperatur und/oder der Abgasmenge und/oder der zugeführten Reduktionsmittelmenge und/oder des Sauerstoffgehaltes des Abgasstroms stromauf des NO-Oxidationskatalysators und ist zum Beispiel in Form eines mathematischen Modells und/oder in Form von Kennfeldern in einer elektronischen Steuereinrichtung einer Vorrichtung zur Durchführung der Überprüfung der Funktionsfähigkeit des NO-Oxidationskatalysators abgelegt. Dabei kann sowohl ein Absolutwert als auch die, durch die Oxidation von Kohlenmonoxid verursachte Änderung der Sauerstoffkonzentration bzw. des Lambdawertes als Ist- und/oder als Soll- bzw. Erwartungswert verwendet werden. Alternativ zur zuvor beispielhaft angegebenen Erfassung des Sauerstoffgehaltes vor dem NO-Oxidationskatalysator über Sensoren kann dieser gegebenenfalls alternativ oder zusätzlich auch über entsprechende mathematische Modelle ermittelt werden.

An dieser Stelle sei ausdrücklich erwähnt, dass zur Erfassung des Sauerstoffgehaltes jede geeignete Mess- bzw. Sensoreinrichtung verwendet werden kann, also zum Beispiel neben Lambdasonden auch NOx-Sensoren, mittels denen der Sauerstoffgehalt ebenfalls erfassbar ist, um nur ein weiteres Beispiel zu nennen.

Befindet sich die Brennkraftmaschine in einem definierten Betriebsmodus, insbesondere in einem stationären Betriebsmodus, ist es auch möglich, die Änderung stromab des NO-Oxidationskatalysators nach Erhöhen der Kohlenmonoxidkonzentration mit Hilfe des Werts vor Erhöhen der Kohlenmonoxidkonzentration zu bestimmen und diesen Wert mit dem Soll- bzw. Erwartungswert zu vergleichen.

Der Einsatz von erfindungsgemäß Kohlenmonoxid gegenüber Kohlenwasserstoffen, wie dies beim Stand der Technik der Fall ist, hat den Vorteil, dass Kohlenmonoxid bei deutlich niedrigeren Temperaturen oxidiert wird, als dies bei langkettigen Kohlenwasserstoffen aus dem Kraftstoff der Fall ist. Dies führt dazu, dass beim Stand der Technik unterhalb einer bestimmten Temperatur kein Umsatz und somit auch keine Überprüfung mit Hilfe von Kohlenwasserstoffen möglich ist, da sowohl der Sollwert als auch der Istwert Null ist. Daher ist der Einsatz von Kohlenmonoxid als Reduktionsmittel insbesondere bei solchen tiefen Temperaturen von Vorteil, wie sie bei Brennkraftmaschinen auftreten, bei denen wenigstens ein Abgasturbolader zum Einsatz gelangt. Ein weiteres Problem bei der Verwendung von Kohlenwasserstoffen stellt das Verkoken der Katalysatoren durch langkettige Kohlenwasserstoffverbindungen, insbesondere bei tiefen Temperaturen, dar.

Durch die Verwendung des Sauerstoff- bzw. Lambdawertes als Bewertungskriterium reichen, im Vergleich zur Temperatur als Bewertungskritierium, wie dies bei der EP 1 373 693 B2 der Fall ist, deutlich geringere Reduktionsmittelmengen aus, da die Reaktion des Systems erheblich schneller erfolgt, als bei thermisch basierten Messungen, die durch die Wärmekapazität des NO-Oxidationskatalysatoren deutlich träger reagieren.

Insgesamt kann somit mit der erfindungsgemäßen Verfahrensführung eine Überprüfung der Funktionsfähigkeit, insbesondere der Oxidationsfähigkeit, eines in der Abgasleitung einer mit Luftüberschuss betriebenen Brennkraftmaschine verbauten NO-Oxidationskatalysators schnell und ohne eine große thermische Belastung des NO-Oxidationskatalysators durchgeführt werden.

Gemäß einer besonders bevorzugten Verfahrensführung wird vorgeschlagen, dass die zugegebene und/oder erzeugte Menge an Kohlenmonoxid so definiert und/oder vorgegeben ist, dass diese den im Abgasstrom stromauf des NO-Oxidationskatalysators enthaltenen Sauerstoff vollständig reduziert. Für den Fall, dass stromauf des NO-Oxidationskatalylsators nur Kohlenmonoxid als Reduktionsmittel vorliegt, wird dies dadurch sichergesetllt, dass die Kohlenmonoxidkonzentration stromauf des NO-Oxidationskatalysators doppelt so hoch ist wie die Sauerstoffkonzentration stromauf des NO-Oxidationskatalysators. Da technische Verbrennungen immer unvollständig ablaufen, muss allerdings auch noch mit geringen Mengen unverbrannter Kohlenwasserstoffe, die ebenfalls als Reduktionsmittel wirken, stromauf der NO-Oxidationskatalysatoren gerechnet werden. Dadurch verringert sich die benötigte Kohlenmonoxidmenge zur kompletten Reduktion des Restsauerstoffs entsprechend. Mit einer derartigen Verfahrensführung kann auf eine exakte Bestimmung der Sauerstoffkonzentration verzichtet werden und stattdessen auf eine Fallunterscheidung "noch Sauerstoff vorhanden/kein Sauerstoff mehr vorhanden" stromab des NO-Oxidationskatalysators übergegangen werden. Dementsprechend können sehr kostengünstige Sprung-Lambda-Sonden, die beim Übergang zwischen "noch Sauerstoff vorhanden/kein Sauerstoff mehr vorhanden" eine sprunghafte Änderung des Signals liefern, verwendet werden. Ist die Verfahrensführung dagegen so ausgelegt, dass noch Restsauerstoff stromab der NO-Oxidationskatalysatoren vorhanden ist, wird demgegenüber die Verwendung von Breitbandlambdasonden notwendig, mit denen der Sauerstoffanteil in einem weiten Bereich bestimmt werden kann, die allerdings auf Grund Ihres komplexeren Aufbaus erheblich teurer und weniger robust sind.

Das Kohlenmonoxid, das zur Überwachung der Funktionsfähigkeit des NO-Oxidationskatalysators benötigt wird, wird bevorzugt durch homogene Kompressionszündung der Brennkraftmaschine oder durch teilhomogenen Brennkraftmaschinenbetrieb motorisch erzeugt. Bei der homogenen Kompressionszündung (englisch: homogenous charge compression ignition, abgekürzt HCCI, oder auch controlled auto ignition, abgekürzt CAI) der Brennkraftmaschine zur Anhebung der Kohlenmonoxidemission in der Überprüfungsphase handelt es sich um ein Brennverfahren, bei dem der Kraftstoff möglichst homogen im Brennraum verteilt und anschließend durch die Kompression selbst gezündet wird. Dies erfolgt meist durch eine definierte Vermischung von Kraftstoff und Frischluft vor den Zylindern der Brennkraftmaschine. Ziel dieser homogenen Kompressionszündung ist es, die Verbrennung im gesamten Brennraum möglichst gleichzeitig zu initiieren. Durch dieses Brennverfahren ist man in der Lage, die NOₓ- und Rußemissionen erheblich abzusenken, während es auf der anderen Seite zu einem Anstieg der Kohlenmonoxidemissionen kommt.

Der Nachteil beim homogenen Brennverfahren besteht bei direkteinspritzenden Brennkraftmaschinen, bei denen im Normalbetrieb der Brennstoff direkt in den Brennraum eingedüst wird, darin, dass im Ansaugtrakt zusätzliche Vorrichtungen zum Einbringen von Kraftstoff vorgesehen werden müssen. Dies bedeutet einen nicht unerheblichen Kostenanstieg.

Dies wird bei der sogenannten teilhomogenen Kompressionszündung vermieden: Hier wird bei direkteinspritzenden Brennkraftmaschinen der Einspritzzeitpunkt stark nach früh verschoben, so dass Kraftstoff und Luft sich erst im Brennraum vermischen. Aufgrund des frühen Einspritzzeitpunkts wird eine Zündung der Kraftstofftröpfchen vermieden und stattdessen deren Verdampfung durch eine relativ lange Verweilzeit begünstigt. Allerdings gelingt meist keine komplette homogene Vermischung von Kraftstoff und Luft, so dass man von einer teilhomogenen Kompressionszündung spricht. Dennoch kommt es auch hier zu einem starken Anstieg der Kohlenmonoxidemissionen.

Gleichzeitig steigt üblicherweise die Emission von Kohlenwasserstoffen an, allerdings mit zwei erheblichen Unterschieden zu einer Verfahrensführung, die auf einer Verschiebung des Einspritzzeitpunkts nach spät basiert:

Zum einen sind die Kohlenmonoxidkonzentrationen bei der homogenen bzw. teilhomogenen Kompressionszündung erheblich höher als die Kohlenwasserstoffkonzentrationen, während sich das Verhältnis bei der Verstellung nach spät in Richtung Kohlenwasserstoff verschiebt und diese üblicherweise erheblich höher als die Kohlenmonoxidkonzentrationen sind. Zum anderen sind die bei der homogenen bzw. teilhomogenen Kompressionszündung emittierten Kohlenwasserstoffe erheblich kurzkettiger, üblicherweise im Bereich von 1 bis 5 Kohlenstoffatomen, so dass eine Versottung der Oxidationskatalysatoren durch langkettige, pyrolisierte und kondensierte Kohlenwasserstoffe vermieden werden kann.

Besonders bevorzugt ist, insbesondere im teilhomogenen Brennkraftmaschinenbetrieb, eine Verfahrensführung, bei der der Einspritzzeitpunkt in der Überprüfungsphase nach früh, insbesondere auf wenigstens 15° Kurbelwinkel bis maximal 370° Kurbelwinkel vor dem oberen Zünd-Todpunkt, höchst bevorzugt auf einen Wert von 20° Kurbelwinkel bis 350° Kurbelwinkel vor dem oberen Zünd-Todpunkt, verschoben wird.

Alternativ oder bevorzugt zusätzlich dazu kann vorgesehen werden in der Überprüfungsphase, während des homogenen oder teilhomogenen Brennkraftmaschinenbetriebs, eine von der Abgasseite zur Ladeluftseite der Brennkraftmaschine rückgeführte Abgasmenge so anzuheben, dass der Anteil des Abgases in der der Brennkraftmaschine zugeführten Ladeluft wenigstens 30% und höchstens 80% beträgt.

Weiter kann auch vorgesehen werden, dass die dem Brennraum der Brennkraftmaschine in der Überprüfungsphase zurückgeführte Abgasmenge und das Luft-/Kraftstoffverhältnis Lambda so variiert werden, dass die Brennraumtemperatur im Bereich von größer bis einschließlich 1,02 Lambda 1850K, im Bereich von 1,02 bis 0,98 Lambda 1600K und im Bereich kleiner 0,98 Lambda 1500K nicht übersteigt. Als weitere alternative oder zusätzliche Maßnahme kann vorgesehen werden, dass das Luft-/Kraftstoffverhältnis nicht unter einen Lambdawert von 1 absinkt oder kleiner gleich 1 ist, wobei allerdings stromauf des NO-Oxidationskatalysators noch Restsauerstoff im Abgas enthalten ist.

Weiter alternativ oder zusätzlich kann vorgesehen werden, dass der Einspritzdruck des Kraftstoffs in den Zylinder in der Überprüfungsphase um wenigstens 20% und/oder auf wenigstens 1200bar, höchstens jedoch 3500bar angehoben wird.

Das Verhältnis aus Kohlenmonoxid- und Kohlenwasserstoffkonzentration, beträgt üblicherweise mindestens 2:1.

Gemäß einer weiteren konkreten Verfahrensführung kann alternativ oder zusätzlich zur Erhöhung der Kohlenmonoxidemissionen vorgesehen werden, dass das Verdichtungsverhältnis in der Überprüfungsphase um wenigstens 20%, höchstens jedoch um 75% und/oder nicht unter 6:1 abgesenkt wird.

Weiter können alternativ oder zusätzlich die Ventilöffnungszeiten in der Überprüfungsphase verändert werden. Diese Maßnahmen zielen zum einen darauf, den Zündverzug zu verlängern, so dass sich eine längere Homogenisierungsphase ergibt, zum anderen sollen sie einen zu starken Druckanstieg durch Absenken der Brenngeschwindigkeit erreichen. So ist es zum einen möglich, wenigstens ein Einlassventil vor Erreichen des unteren Ladungswechseltodpunkts zu schließen. Dadurch kommt es bei geschlossenem Auslassventil zu einer Verringerung des Brennraumdrucks und damit einhergehend zu einer Absenkung der Brennraumtemperatur. Auch ein sehr spätes Schließen des Einlassventils nach dem unteren Ladungswechseltodpunkt ist denkbar, wodurch bereits angesaugte Luft wieder über die Einlassventile ausgestoßen wird. Dieses Verfahren ist als Miller-Zyklus bekannt und führt aufgrund der geringeren Füllung zu niedrigeren Spitzendrücken währen der Verbrennung. Eine weitere Möglichkeit besteht darin, die Ventilöffnungszeiten in der Überprüfungsphase derart zu verändern, dass wenigstens ein Auslassventil länger geöffnet bleibt, wodurch der Restgasanteil durch Rückströmen von Abgas aus dem Abgastrakt angehoben und dadurch bedingt die Brenngeschwindigkeit verringert wird. Die Ventilöffnungszeiten können insbesondere mit Hilfe eines variablen Ventiltriebs variiert werden, was an sich Stand der Technik ist, so dass an dieser Stelle nicht weiter darauf eingegangen wird (EP 0 279 265, DE 38 233 32 A1, DE 39 20 895 A1).

In Verbindung mit der erfindungsgemäßen Lehre ist dabei insbesondere zu berücksichtigen, dass die zuvor gezeigten motorischen Maßnahmen zur Erhöhung der Kohlenmonoxidemissionen in der Überprüfungsphase, wie zum Beispiel Spritzbeginn, rückgeführte Abgasmenge, Verdichtungsverhältnis, Ventilöffnungszeiten, Einspritzdruck, etc. bisher im Stand der Technik stets dahingehend variiert werden, dass die gebildete Kohlenmonoxidmenge möglichst gering gehalten wird, um erhöhte Kohlenmonoxidemissionen zu vermeiden, bzw. die Anhebung der Temperatur durch die katalytische Oxidation von langkettigen Kohlenwasserstoffen realisiert wird, was nur bei ausreichend hohen Abgastemperaturen ohne Verkokung der Katalysatoren gelingt. Im Gegensatz dazu werden bei der erfindungsgemäßen Lösung die Motorparameter jedoch so verändert, dass genau das Gegenteil der Fall ist, jedoch die CO-Emissionen in der Überprüfungsphase deutlich stärker angehoben werden als die HC-Emissionen. Zudem stellt die erfindungsgemäße Verfahrensführung sicher, dass ein Großteil der Kohlenwasserstoffe erheblich kleiner, typischerweise im Bereich von 1 bis 5 Kohlenstoffatomen pro Molekül, ist als dies bei den oben genannten Verfahren des Standes der Technik der Fall ist, wodurch zusätzlich die Gefahr des Verkokens der Katalysatoren durch große Mengen langkettiger Kohlenwasserstoffe vermieden wird. Da Kohlenmonoxid und kurzkettige Kohlenwasserstoff deutlich einfacher zu oxidieren sind als die langkettigen, unverbrannten Kohlenwasserstoffe aus der Kraftstofffraktion, wie sie bei einer späten Einspritzung gemäß dem Stand der Technik entstehen, kann die Anspringtemperatur der Katalysatoren erfindungsgemäß abgesenkt werden. Dies ermöglicht eine Überprüfung der Funktionsfähigkeit der NO-Oxidationskatalysatoren auch bei niedrigen Abgastemperaturen stromauf derselben.

Ferner wird eine vorteilhafte Vorrichtung zur Überprüfung der Funktionsfähigkeit eines in der Abgasleitung einer mit Luftüberschuss betriebenen Brennkraftmaschine verbauten NO-Oxidationskatalysators vorgeschlagen. Die mit der erfindungsgemäßen Vorrichtung zu erzielenden Vorteile wurden bereits zuvor in Verbindung mit der Verfahrensführung ausführlich erläutert. Insofern wird auf die zuvor gemachten Ausführungen verwiesen.

Die vorstehend erläuterten und/oder in den Unteransprüchen wiedergegebenen vorteilhaften Aus- und Weiterbildungen der Erfindung können dabei, außer zum Beispiel in den Fällen eindeutiger Abhängigkeiten oder unvereinbarer Alternativen, einzeln oder aber auch in beliebiger Kombination miteinander zur Anwendung kommen. Die beigefügten Ansprüche definieren den Schutzumfang der Erfindung.

Die Erfindung wird nachfolgend anhand einer Zeichnung lediglich beispielhaft näher erläutert.

Es zeigen:
- Fig. 1: schematisch den Aufbau einer Abgasnachbehandlungsvorrichtung zur Durchführung einer erfindungsgemäßen Verfahrensführung, und
- Fig. 2: schematisch ein Ablaufdiagramm zur beispielhaften Erläuterung einer erfindungsgemäßen Verfahrensführung bei stationär betriebener Brennkraftmaschine.

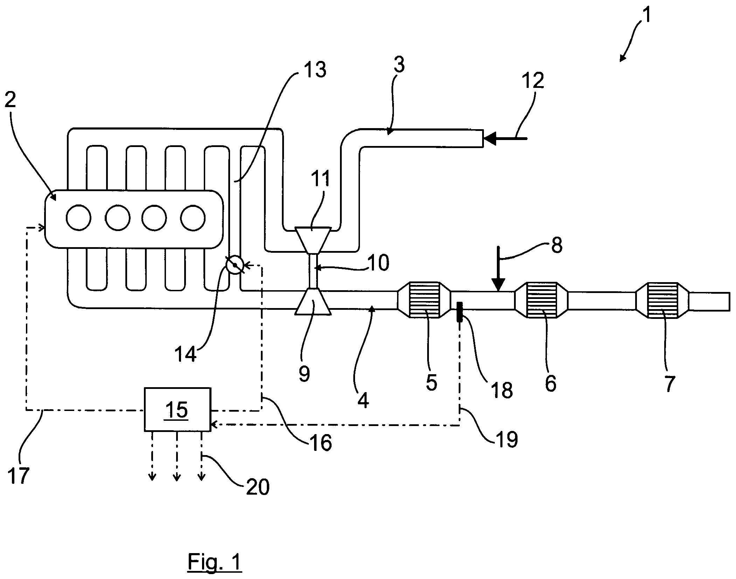

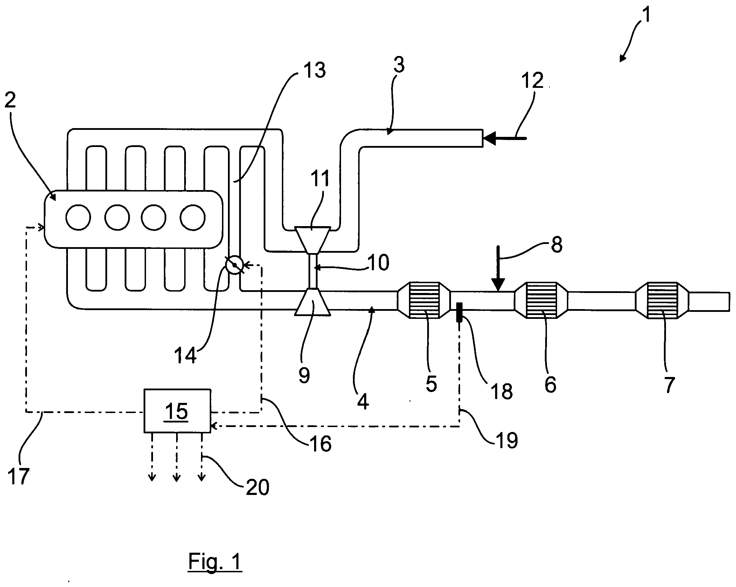

Die Fig. 1 zeigt schematisch eine Abgasnachbehandlungsvorrichtung 1 für eine hier lediglich äußerst schematisch dargestellte Brennkraftmaschine 2, der über eine Ladeluftleitung 3 Ladeluft 12 in an sich bekannter Weise zugeführt wird.

Von der Brennkraftmaschine 2 führt weiter eine Abgasleitung 4 weg, in der hier beispielhaft ein NO-Oxidationskatalysator 5, ein SCR-Katalysator 6 sowie ein Partikelfilter 7 in Abgasströmungsrichtung nacheinander angeordnet sind. Stromauf des SCR-Katalysators 6 erfolgt, wie hier lediglich äußerst schematisch mit dem Pfeil angedeutet, eine Zudosierung eines Reduktionsmittels, beispielsweise einer wässrigen Ammoniaklösung.

Weiter ist stromauf des SCR-Katalysators 6 eine Sauerstoffmesseinrichtung 18, zum Beispiel eine Lambda-Sonde, in der Abgasleitung 4 angeordnet, und zwar stromab des NO-Oxidationskatalysators 5.

Stromauf des NO-Oxidationskatalysators 5 ist eine Abgasturbine 9 eines Abgasturboladers 10 in der Abgasleitung 4 angeordnet, mittels der in üblicher Weise ein Verdichter 11 in der Ladeluftleitung 3 zur Verdichtung der Ladeluft 12 angetrieben wird.

Ferner ist von der Abgasleitung 4 eine Abgasrückführleitung 13 zur Ladeluftleitung 3 geführt, mittels der in an sich bekannter Weise Abgas von der Abgasleitung 4 zur Ladeluftleitung 3 entsprechend vorgegebener, definierter Rückführparameter rückgeführt werden kann. Zur Freigabe bzw. zum Absperren der Abgasrückführleitung 13 ist in diese Abgasrückführleitung 13 ein hier lediglich äußerst schematisch dargestelltes Absperrelement 14, zum Beispiel eine Abgasklappe oder dergleichen, angeordnet.

Wird nun ausgehend von einem normalen Betrieb bzw. Nicht-Überprüfungsbetrieb der Brennkraftmaschine 2 festgestellt oder vorgegeben, dass eine Überprüfung der Funktionsfähigkeit bzw. Oxidationsfähigkeit des NO-Oxidationskatalysators 5 vorzunehmen ist, dann kann zu Beginn der Überprüfungsphase mittels der hier lediglich äußerst schematisch dargestellten Steuereinrichtung 15 eine homogene Kompressionszündung der Brennkraftmaschine oder ein teilhomogener Brennkraftmaschinenbetrieb vorgegeben werden bzw. wenigstens ein definierter Brennkraftmaschinen-Betriebsparameter so gegenüber einer Einstellung in der Nicht-Überprüfungsphase verändert werden, dass die Kohlenmonoxid-Emissionen der Brennkraftmaschine 2 angehoben werden. Bevorzugt wird dabei die Kohlenmonoxidkonzentration stromauf des NO-Oxidationskatalysators 5 höchstens auf das Doppelte der Sauerstoffkonzentration stromauf des NO-Oxidationskatalysators 5 angehoben.

Dadurch, dass der dem NO-Oxidationskatalysator 5 nachgeschaltete SCR-Katalysator 6 bevorzugt keine CO-Oxidationsaktivität aufweist, ist sichergestellt, dass es am SCR-Katalysator 6 auch zu keinem nennenswerten Temperaturhub kommt, so dass dessen thermische Schädigung zuverlässig vermieden werden kann.

Um die Kohlenmonoxidemissionen in der gewünschten Weise anheben zu können, kann mittels der Steuereinrichtung 15 beispielsweise das Absperrelement 14 dergestalt über die hier strichpunktierte Steuerleitung 16 angesteuert werden, dass die Abgasrückführrate auf über 30%, bezogen auf die der Brenkraftmaschine 2 zugeführte Ladeluftmenge, angehoben wird. Die rückgeführte Abgasmenge kann zusätzlich angehoben werden, indem in der Frischluftzuführung 3 eine Drosseleinrichtung (hier nicht dargestellt) zur Erhöhung der Druckdifferenz zwischen Abgas- und Frischluftseite vorgesehen wird. Alternativ oder zusätzlich kann, wie dies mit der Steuerleitung 17 lediglich schematisch angedeutet ist, vorgesehen sein, dass das Luft-/Kraftstoffverhältnis Lambda zum Beispiel auf unter 1,05 abgesenkt und/oder dass der Einspritzdruck um zum Beispiel wenigstens 20% bzw. auf mindestens 1200Bar erhöht wird. Alternativ oder zusätzlich kann auch ein Verschieben des Einspritzzeitpunktes zum Beispiel auf mindestens 20° Kurbelwinkel, jedoch nicht mehr als 370° Kurbelwinkel vor dem oberen Todpunkt (Zünd-OT) und/oder ein Absenken des Verdichtungsverhältnisses, insbesondere um mindestens 20%, und/oder ein Verändern der Ventilöffnungszeiten vorgesehen sein.

Mit einer derartigen Verfahrensführung wird erreicht, dass das große Mengen Kohlenmonoxid generiert werden, die am NO-Oxidationskatalysator 5 mit Hilfe des im Abgasstrom stromauf des NO-Oxidationskatalysators 5 enthaltenen Sauerstoffes oxidiert werden. Die durch die Oxidation des Kohlenmonoxids bedingte Änderung des Sauerstoffgehaltes im Abgasstrom stromab des NO-Oxidationskatalysators 5 wird mittels der Sauerstoffmesseinrichtung 18 als Sauerstoff-Istwert erfasst und der Steuereinrichtung 15 über die Steuer- bzw.

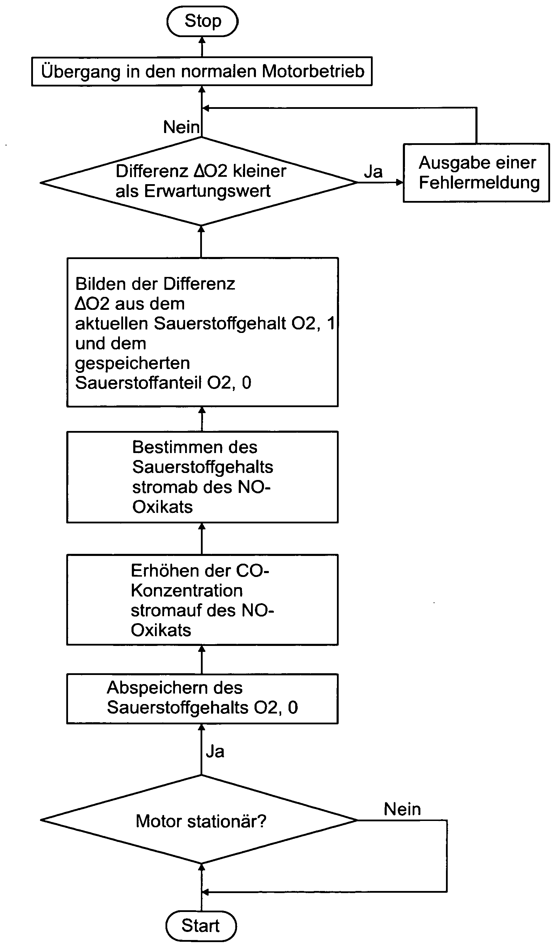

Signalleitung 19 zugeführt. In der Steuereinrichtung 15 bzw. einer Vergleichereinrichtung der Steuereinrichtung 15 wird dieser so erfasste bzw. ermittelte Sauerstoff-Istwert mit einem zum Beispiel über ein Kennfeld vorgegebenen oder mit einem errechneten Sauerstoff-Sollwert als Erwartungswert verglichen, wobei bei einer definierten Abweichung des Sauerstoff-Istwertes von dem Sauerstoff-Sollwert und damit in Abhängigkeit von dem Grad der Abweichung auf eine verschlechterte Funktionsfähigkeit des NO-Oxidationskatalysators geschlossen werden kann oder dieser auch für in Ordnung befunden werden kann. Im Falle einer festgestellten mangelnden bzw. verschlechterten Funktionsfähigkeit, die definierte Schwellwerte übersteigt, kann zum Beispiel über eine Steuerleitung 20 ein Fehlersignal ausgegeben werden, zum Beispiel fahrzeugseitig abgespeichert werden und/oder fahrerseitig mittels einer Anzeigeeinrichtung angezeigt werden. Dies wird nachfolgend anhand der Fig. 2 nochmals anhand einer konkreten Verfahrensführung beispielhaft näher erläutert.

Es versteht sich, dass am Ende dieser Überprüfungsphase wieder ein herkömmlicher Brennkraftmaschinenbetrieb eingestellt werden kann, das heißt insbesondere die homogene Kompressionszündung der Brennkraftmaschine oder ein teilhomogener Brennkraftmaschinenbetrieb beendet wird.

Die Steuereinrichtung 15 kann zum Beispiel durch ein separates Steuergerät gebildet sein. Ebenso kann die Steuereinrichtung 15 aber auch Bestandteil eines Motorsteuergerätes der Brennkraftmaschine 2 sein.

Wie dies in der Fig. 2 dargestellt ist, kann zur Überprüfung der Funktionsfähigkeit in einem ersten Schritt erfasst werden, ob sich die Brennkraftmaschine (in der Fig. 2 als Motor bezeichnet) in einem stationären bzw. stabilen Betriebsmodus befindet, das heißt zum Beispiel nicht in einem instabilen Anfahrbetriebsmodus befindet. Wird dies bejaht, wird in einem darauffolgenden Verfahrensschritt der Sauerstoffgehalt stromab des NO-Oxidationskatalysators 5 mittels der Sauerstoffmesseinrichtung 18 erfasst. Dieser Wert wird als Sauerstoffgehalt O2,0 abgespeichert. Sodann wird die CO-Konzentration stromauf des NO-Oxidationskatalysators 5 in der zuvor beschriebenen Weise, insbesondere durch das Verstellen von Motorparametern zum Übergang in einen HCCI-Betrieb, erhöht und mittels der Sauerstoffmesseinrichtung 18 wiederum der Sauerstoffgehalt O2,1 stromab des NO-Oxidationskatalysators 5 erfasst. Dieser so ermittelte aktuelle Sauerstoffgehalt O2,1 wird anschließend zum Beispiel durch Differenzbildung mit dem abgespeicherten Wert für den Sauerstoffanteil O2,0 verglichen, wobei für den Fall, dass die Differenz zwischen den beiden Werten kleiner als ein vorgegebener Soll- bzw. Erwartungswert sein sollte, eine Fehlermeldung ausgegeben wird. Falls dies nicht der Fall sein sollte, wird der Betrieb mit erhöhten CO-Emissionen wieder verlassen, die Überprüfung gestoppt und keine Fehlermeldung ausgegeben. Nach diesem Schritt wird dann wieder in den normalen Brennkraftmaschinen- bzw. Motorbetrieb übergegangen, in dem die CO-Emissionen der Brennkraftmaschine wieder so hoch sind wie vor der Funktionsfähigkeitsüberprüfung des NO-Oxidationskatalysators bzw. erheblich niedriger sind als während dieser Überprüfung, vorteilhaft bei höchstens zwanzig Prozent des Wertes während der Überprüfung liegen.

Bei den Betriebsparametern zur Ermittlung eines stationären Betriebszusatandes (der Begriff stationär umfasst ausdrücklich auch einen quasi-stationären Betriebszustand) kann es sich vorteilhaft um die Kühlwassertemperatur und/oder die Öltemperatur und/oder die Kraftstofftemperatur und/oder den Kraftstoffeinspritzdruck und/oder die Sauglufttemperatur und/oder die Ladelufttemperatur und/oder die Turboladerdrehzahl und/oder den Ladedruck und/oder die Fahrgeschwindigkeit und/oder die Motordrehzahl und/oder die Kraftstoffeinspritzmenge und/oder die Abgastemperaturen und/oder die Katalysatortemperatur und/oder die Reduktionsmitteleinspritzmenge und/oder die Abgasrückführungsrate und/oder die Emissionen und/oder das Kraftstoff-/Luftverhältnis handeln und/ oder es kann die zeitliche Änderung dieser Größen herangezogen werden.

## Patentansprüche

1. Verfahren zur Überprüfung der Oxidationsfähigkeit eines in der Abgasleitung einer mit Luftüberschuss betriebenen Brennkraftmaschine verbauten NO-Oxidationskatalysators, **dadurch gekennzeichnet,**
**dass** für die Überprüfung der Oxidationsfähigkeit des NO-Oxidationskatalysators (5) durch Veränderung wenigstens eines definierten Brennkraftmaschinen-Betriebsparameters eine definierte Menge Kohlenmonoxid als Reduktionsmittel stromauf des NO-Oxidationskatalysators (5) zugegeben und/oder erzeugt wird, so dass gegenüber einer Einstellung in einer Nicht-Überprüfungsphase die Kohlenmonoxid-Emissionen der Brennkraftmaschine angehoben werden,
**dass** dieses Kohlenmonoxid am NO-Oxidationskatalysator (5) mit Hilfe des im Abgasstrom stromauf des NO-Oxidationskatalysators enthaltenen Sauerstoffes oxidiert wird, und
**dass** die durch die Oxidation des zugegebenen und/oder erzeugten Kohlenmonoxids bedingte Änderung des Sauerstoffgehaltes im Abgasstrom innerhalb und/oder stromab des NO-Oxidationskatalysators (5) als Sauerstoff-Istwert erfasst und/oder ermittelt wird und mit einem vorgegebenen Sauerstoff-Sollwert verglichen wird, wobei bei einer definierten Abweichung des Sauerstoff-Istwertes von dem Sauerstoff-Sollwert auf eine verschlechterte Oxidationsfähigkeit des NO-Oxidationskatalysators (5) geschlossen wird.

2. Verfahren nach Anspruch 1, **dadurch gekennzeichnet, dass** die zugegebene und/oder erzeugte Menge an Kohlenmonoxid so definiert und/oder vorgegeben ist, dass dieses den im Abgasstrom stromauf des NO-Oxidationskatalysators enthaltenen Sauerstoff vollständig reduziert.

3. Verfahren nach Anspruch 1 oder 2, **dadurch gekennzeichnet, dass** die Kohlenmonoxidkonzentration stromauf des NO-Oxidationskatalysators (5) höchstens doppelt so hoch ist wie die Sauerstoffkonzentration stromauf des NO-Oxidationskatalysators (5) und/oder dass das Verhältnis aus Kohlenmonoxid- zu Kohlenwasserstoffkonzentration mindestens 2:1 beträgt.

4. Verfahren nach einem der vorhergehenden Ansprüche, **dadurch gekennzeichnet, dass** das Kohlenmonoxid durch homogene Kompressionszündung der Brennkraftmaschine oder durch teilhomogenen Brennkraftmaschinenbetrieb erzeugt wird.

5. Verfahren nach einem der vorhergehenden Ansprüche, **dadurch gekennzeichnet, dass** der Einspritzzeitpunkt des Kraftstoffs in der Überprüfungsphase, insbesondere bei einem teilhomogenen Brennkraftmaschinenbetrieb, nach früh, insbesondere auf 15° Kurbelwinkel bis maximal einschließlich 370° Kurbelwinkel vor dem oberen Zünd-Totpunkt, vorteilhaft auf 20° Kurbelwinkel bis 350° Kurbelwinkel vor dem oberen Zünd-Totpunkt, verschoben wird.

6. Verfahren nach einem der vorhergehenden Ansprüche, **dadurch gekennzeichnet, dass** in der Überprüfungsphase, insbesondere bei einem teilhomogenen Brennkraftmaschinenbetrieb, eine von der Abgasseite zur Ladeluftseite der Brennkraftmaschine (2) rückgeführte Abgasmenge so angehoben wird, dass der Anteil des Abgases in der der Brennkraftmaschine (2) zugeführten Ladeluft wenigstens 30% und höchstens 80% beträgt.

7. Verfahren nach einem der vorhergehenden Ansprüche, **dadurch gekennzeichnet, dass** die dem Brennraum der Brennkraftmaschine (2) in der Überprüfungsphase zurückgeführte Abgasmenge und das Luft-/Kraftstoffverhältnis Lambda so variiert werden, dass die Brennraumtemperatur im Bereich größer bis einschließlich 1,02 Lambda, insbesondere im Bereich von 40 bis einschließlich 1,02 Lambda, 1850K, im Bereich von 1,02 bis einschließlich 0,98 Lambda 1600K und im Bereich kleiner 0,98 Lambda 1500K nicht übersteigt.

8. Verfahren nach einem der vorhergehenden Ansprüche, **dadurch gekennzeichnet, dass** das Luft-/Kraftstoffverhältnis nicht unter einen Lambdawert von eins absinkt oder kleiner gleich eins ist, sofern stromauf des NO-Oxidationskatalysators noch Restsauerstoff im Abgas enthalten ist.

9. Verfahren nach einem der vorhergehenden Ansprüche, **dadurch gekennzeichnet, dass** der Einspritzdruck in der Überprüfungsphase um wenigstens 20% und/oder auf wenigstens 1200bar bis maximal 3500bar angehoben wird.

10. Verfahren nach einem der vorhergehenden Ansprüche, **dadurch gekennzeichnet, dass** das Verdichtungsverhältnis in der Überprüfungsphase um wenigstens 20% bis maximal 75% und/oder nicht unter 6:1 abgesenkt wird.

11. Verfahren nach einem der vorhergehenden Ansprüche, **dadurch gekennzeichnet, dass** die Ventilöffnungszeiten in der Überprüfungsphase derart geändert werden, dass die Restgasmenge angehoben wird und/oder die Brennraumtemperatur abgesenkt wird.

12. Verfahren nach Anspruch 11, **dadurch gekennzeichnet, dass** die Ventilöffnungszeiten in der Überprüfungsphase derart verändert werden, dass, insbesondere mit Hilfe eines variablen Ventiltriebs, wenigstens ein Auslassventil länger geöffnet bleibt und/oder wenigstens ein Einlassventil später geöffnet und/oder später geschlossen wird.

13. Verfahren nach einem der vorhergehenden Ansprüche, **dadurch gekennzeichnet, dass** der Sauerstoff-Istwert aus einer Sauerstoffmessung stromauf und einer Sauerstoffmessung stromab des NO-Oxidationskatalysators (5) ermittelt wird, wobei bevorzugt vorgesehen ist, dass die Sauerstoffkonzentration mit Hilfe einer stromab des NO-Oxidationskatalysators (5) angebrachten Sensoreinrichtung (18) bestimmt wird.

14. Verfahren nach einem der vorhergehenden Ansprüche, **dadurch gekennzeichnet, dass** der Sauerstoff-Istwert aus der Änderung und/oder Abweichung des nach Erhöhen der Kohlenmonoxidkonzentration stromab des NO-Oxidationskatalysators (5) erfassten und/oder ermittelten Sauerstoffwertes gegenüber dem vor Erhöhen der Kohlenmonoxidkonzentration stromab des NO-Oxidationskatalysators (5) erfassten und/oder ermittelten Sauerstoffwertes bestimmt wird, wobei bevorzugt vorgesehen ist, dass die Sauerstoffkonzentration mit Hilfe einer stromab des NO-Oxidationskatalysators angebrachten Sensoreinrichtung (18) bestimmt wird.

15. Vorrichtung zur Durchführung eines Verfahrens zur Überprüfung der Oxidationsfähigkeit eines in der Abgasleitung einer mit Luftüberschuss betriebenen Brennkraftmaschine verbauten NO-Oxidationskatalysators, **dadurch gekennzeichnet,**
**dass** eine Steuereinrichtung (15) vorgesehen ist, mittels der zur Überprüfung der Oxidationsfähigkeit des NO-Oxidationskatalysators (5) durch Veränderung wenigstens eines definierten Brennkraftmaschinen-Betriebsparameters die Zudosierung und/oder Erzeugung einer definierten Menge Kohlenmonoxid als Reduktionsmittel stromauf des NO-Oxidationskatalysators (5) einleitbar und/oder durchführbar ist, so dass gegenüber einer Einstellung in einer Nicht-Überprüfungsphase die Kohlenmonoxid-Emissionen der Brennkraftmaschine angehoben werden,
**dass** dieses Kohlenmonoxid am NO-Oxidationskatalysator (5) mit Hilfe des im Abgasstrom stromauf des NO-Oxidationskatalysators (5) enthaltenen Sauerstoffes oxidiert wird,
**dass** wenigstens eine Sensoreinrichtung und/oder wenigstens eine Rechnereinrichtung vorgesehen ist, mittels der die durch die Oxidation des zugegebenen und/oder erzeugten Kohlenmonoxids bedingte Änderung des Sauerstoffgehaltes im Abgasstrom innerhalb und/oder stromab des NO-Oxidationskatalysators (5) als Sauerstoff-Istwert erfassbar und/oder ermittelbar ist, und dass wenigstens eine Vergleichereinrichtung vorgesehen ist, mittels der der Sauerstoff-Istwert mit einem Sauerstoff-Sollwert vergleichbar ist, wobei bei einer definierten Abweichung des Sauerstoff-Istwertes von dem Sauerstoff-Sollwert auf eine verschlechterte Oxidationsfähigkeit des NO-Oxidationskatalysators (5) geschlossen wird.

16. Vorrichtung nach Anspruch 15, **dadurch gekennzeichnet, dass** eine Speicher- und/oder Ausgabe- und/oder Anzeigeeinrichtung vorgesehen ist, mittels der bei einer erfassten und/oder ermittelten fehlenden Oxidationsfähigkeit eine Fehlermeldung erzeugbar und/oder ausgebbar ist.

## Claims

1. Method for testing the oxidation capability of an NO oxidation catalytic converter installed in the exhaust line of an internal combustion engine which is operated with an excess of air, **characterized**
**in that**, for the testing of the oxidation capability of the NO oxidation catalytic converter (5), a defined quantity of carbon monoxide as reducing agent is metered in and/or generated upstream of the NO oxidation catalytic converter (5) through variation of at least one defined internal combustion engine operating parameter, such that the carbon monoxide emissions of the internal combustion engine are increased in relation to a setting in a non-testing phase,
**in that** said carbon monoxide is oxidized at the NO oxidation catalytic converter (5) with the aid of the oxygen contained in the exhaust-gas flow upstream of the NO oxidation catalytic converter, and
**in that** the change in the oxygen content in the exhaust-gas flow within and/or downstream of the NO oxidation catalytic converter (5) caused as a result of the oxidation of the metered-in and/or generated carbon monoxide is detected and/or ascertained as an oxygen actual value and is compared with a predefined oxygen setpoint value, wherein, in the presence of a defined deviation of the oxygen actual value from the oxygen setpoint value, an impaired oxidation capability of the NO oxidation catalytic converter (5) is inferred.

2. Method according to Claim 1, **characterized in that** the metered-in and/or generated quantity of carbon monoxide is defined and/or predefined such that it completely reduces the oxygen contained in the exhaust-gas flow upstream of the NO oxidation catalytic converter.

3. Method according to Claim 1 or 2, **characterized in that** the carbon monoxide concentration upstream of the NO oxidation catalytic converter (5) is at most twice as high as the oxygen concentration upstream of the NO oxidation catalytic converter (5) and/or **in that** the ratio of carbon monoxide to hydrocarbon concentration amounts to at least 2:1.

4. Method according to any of the preceding claims, **characterized in that** the carbon monoxide is generated by homogeneous compression ignition of the internal combustion engine or by partially homogeneous internal combustion engine operation.

5. Method according to any of the preceding claims, **characterized in that**, in the testing phase, in particular in the case of partially homogeneous internal combustion engine operation, the injection time of the fuel is advanced, in particular to 15° crank angle to at most 370° crank angle inclusive before ignition top dead centre, advantageously to 20° crank angle to 350° crank angle before ignition top dead centre.

6. Method according to any of the preceding claims, **characterized in that**, in the testing phase, in particular in the case of partially homogeneous internal combustion engine operation, an exhaust-gas quantity recirculated from the exhaust-side to the charge-air side of the internal combustion engine (2) is increased such that the fraction of the exhaust gas in the charge air fed to the internal combustion engine (2) amounts to at least 30% and at most 80%.

7. Method according to any of the preceding claims, **characterized in that** the exhaust-gas quantity recirculated to the combustion chamber of the internal combustion engine (2) in the testing phase and the air/fuel ratio Lambda are varied such that, in the range of greater than to 1.02 Lambda inclusive, in particular in the range from 40 to 1.02 Lambda inclusive, the combustion chamber temperature does not exceed 1850 K, and in the range from 1.02 to 0.98 Lambda inclusive, the combustion chamber does not exceed 1600 K, and in the range of less than 0.98 Lambda, the combustion chamber temperature does not exceed 1500 K.

8. Method according to any of the preceding claims, **characterized in that** the air/fuel ratio does not fall below a lambda value of one, or is not less than or equal to one, if residual oxygen is still contained in the exhaust gas upstream of the NO oxidation catalytic converter.

9. Method according to any of the preceding claims, **characterized in that** the injection pressure is, in the testing phase, increased by at least 20% and/or to at least 1200 bar to at most 3500 bar.

10. Method according to any of the preceding claims, **characterized in that** the compression ratio is, in the testing phase, reduced by at least 20% to at most 75% and/or is not reduced below 6:1.

11. Method according to any of the preceding claims, **characterized in that** the valve opening times are, in the testing phase, altered such that the residual gas quantity is increased and/or the combustion chamber temperature is reduced.

12. Method according to Claim 11, **characterized in that** the valve opening times are, in the testing phase, altered such that, in particular with the aid of a variable valve drive, at least one outlet valve remains open for longer and/or at least one inlet valve is opened later and/or is closed later.

13. Method according to any of the preceding claims, **characterized in that** the oxygen actual value is ascertained from an oxygen measurement upstream and an oxygen measurement downstream of the NO oxidation catalytic converter (5), wherein it is preferably provided that the oxygen concentration is determined with the aid of a sensor device (18) fitted downstream of the NO oxidation catalytic converter (5).

14. Method according to any of the preceding claims, **characterized in that** the oxygen actual value is determined from the change and/or deviation of the oxygen value detected and/or ascertained downstream of the NO oxidation catalytic converter (5) after the increase of the carbon monoxide concentration in relation to the oxygen value detected and/or ascertained downstream of the NO oxidation catalytic converter (5) prior to the increase of the carbon monoxide concentration, wherein it is preferably provided that the oxygen concentration is determined with the aid of a sensor device (18) fitted downstream of the NO oxidation catalytic converter.

15. Device for carrying out a method for testing the oxidation capability of an NO oxidation catalytic converter installed in the exhaust line of an internal combustion engine which is operated with an excess of air, **characterized**
**in that** a control device (15) is provided by means of which, for the testing of the oxidation capability of the NO oxidation catalytic converter (5), the metering-in and/or generation of a defined quantity of carbon monoxide as reducing agent can be initiated or performed upstream of the NO oxidation catalytic converter (5) through variation of at least one defined internal combustion engine operating parameter, such that the carbon monoxide emissions of the internal combustion engine are increased in relation to a setting in a non-testing phase,
**in that** said carbon monoxide is oxidized at the NO oxidation catalytic converter (5) with the aid of the oxygen contained in the exhaust-gas flow upstream of the NO oxidation catalytic converter, and
**in that** at least one sensor device and/or at least one processor device is provided by means of which the change in the oxygen content in the exhaust-gas flow within and/or downstream of the NO oxidation catalytic converter (5) caused as a result of the oxidation of the metered-in and/or generated carbon monoxide can be detected and/or ascertained as an oxygen actual value, and in that at least one comparator device is provided by means of which the oxygen actual value can be compared with a predefined oxygen setpoint value, wherein, in the presence of a defined deviation of the oxygen actual value from the oxygen setpoint value, an impaired oxidation capability of the NO oxidation catalytic converter (5) is inferred.

16. Device according to Claim 15, **characterized in that** a memory and/or output and/or display device is provided by means of which a fault message can be generated and/or output in the event of an absence of oxidation capability being detected and/or ascertained.

## Revendications

1. Procédé de vérification de la capacité d'oxydation d'un catalyseur d'oxydation NO intégré dans la conduite de gaz d'échappement d'un moteur à combustion interne entraîné avec un excès d'air, **caractérisé en ce que**
pour la vérification de la capacité d'oxydation du catalyseur d'oxydation NO (5), une quantité de monoxyde de carbone définie est additionnée et/ou produite en tant que réducteur en amont du catalyseur d'oxydation NO (5) par la modification d'au moins un paramètre de fonctionnement défini du moteur à combustion interne, de sorte que les émissions de monoxyde de carbone du moteur à combustion interne sont augmentées par rapport à un réglage dans une phase sans vérification, ce monoxyde de carbone est oxydé au niveau du catalyseur d'oxydation NO (5) à l'aide de l'oxygène contenu dans le courant de gaz d'échappement en amont du catalyseur d'oxydation NO, et
la modification de la teneur en oxygène dans le courant de gaz d'échappement, causée par l'oxydation du monoxyde de carbone additionné et/ou produit, est détectée et/ou déterminée à l'intérieur et/ou en aval du catalyseur d'oxydation NO (5) sous la forme d'une valeur réelle d'oxygène et comparée à une valeur théorique d'oxygène spécifiée, dans lequel un écart défini de la valeur réelle d'oxygène par rapport à la valeur théorique d'oxygène permet de conclure à une capacité d'oxydation détériorée du catalyseur d'oxydation NO (5).

2. Procédé selon la revendication 1, **caractérisé en ce que** la quantité de monoxyde de carbone additionnée et/ou produite est définie et/ou spécifiée de telle sorte qu'elle réduit complètement l'oxygène contenu dans le courant de gaz d'échappement en amont du catalyseur d'oxydation NO.

3. Procédé selon la revendication 1 ou 2, **caractérisé en ce que** la concentration en monoxyde de carbone en amont du catalyseur d'oxydation NO (5) est au maximum le double de la concentration en oxygène en amont du catalyseur d'oxydation NO (5) et/ou **en ce que** le rapport entre la concentration en monoxyde de carbone et la concentration en hydrocarbure est d'au moins 2:1.

4. Procédé selon l'une quelconque des revendications précédentes, **caractérisé en ce que** le monoxyde de carbone est produit par un allumage par compression homogène du moteur à combustion interne ou par un fonctionnement partiellement homogène du moteur à combustion interne.

5. Procédé selon l'une quelconque des revendications précédentes, **caractérisé en ce que** le moment d'injection du carburant dans la phase de vérification, en particulier lors d'un fonctionnement partiellement homogène du moteur à combustion interne, est décalé dans le sens avance, en particulier à 15° d'angle de vilebrequin jusqu'à un maximum de 370° d'angle de vilebrequin inclus avant le point mort d'allumage supérieur, avantageusement à 20° d'angle de vilebrequin jusqu'à 350° d'angle de vilebrequin avant le point mort d'allumage supérieur.

6. Procédé selon l'une quelconque des revendications précédentes, **caractérisé en ce que** dans la phase de vérification, en particulier lors d'un fonctionnement partiellement homogène du moteur à combustion interne, une quantité de gaz d'échappement ramenée du côté gaz d'échappement au côté air de suralimentation du moteur à combustion interne (2) est augmentée de telle sorte que la proportion des gaz d'échappement dans l'air de suralimentation amené au moteur à combustion interne (2) s'élève à au moins 30 % et au plus 80 %.

7. Procédé selon l'une quelconque des revendications précédentes, **caractérisé en ce que** la quantité de gaz d'échappement ramenée à la chambre de combustion du moteur à combustion interne (2) dans la phase de vérification et le rapport air/carburant lambda sont amenés à varier de telle sorte que la température de chambre de combustion ne dépasse pas 1850 K dans la plage supérieure ou égale à 1,02 lambda, en particulier dans la plage de 40 à 1,02 lambda inclus, ne dépasse pas 1600 K dans la plage de 1,02 à 0,98 lambda inclus, et ne dépasse pas 1500 K dans la plage inférieure à 0,98 lambda.

8. Procédé selon l'une quelconque des revendications précédentes, **caractérisé en ce que** le rapport air/carburant ne descend pas sous une valeur lambda de 1, ou n'est pas inférieur ou égal à 1, dans la mesure où de l'oxygène résiduel est toujours contenu dans les gaz d'échappement en amont du catalyseur d'oxydation NO.

9. Procédé selon l'une quelconque des revendications précédentes, **caractérisé en ce que** la pression d'injection dans la phase de vérification est augmentée d'au moins 20 % et/ou à au moins 1200 bar jusqu'à un maximum de 3500 bar.

10. Procédé selon l'une quelconque des revendications précédentes, **caractérisé en ce que** le rapport volumétrique dans la phase de vérification est diminué d'au moins 20 % jusqu'à un maximum de 75 % et/ou n'est pas diminué à moins de 6:1.

11. Procédé selon l'une quelconque des revendications précédentes, **caractérisé en ce que** les temps d'ouverture de soupape dans la phase de vérification sont modifiés de telle sorte que la quantité de gaz résiduelle est augmentée et/ou la température de chambre de combustion est diminuée.

12. Procédé selon la revendication 11, **caractérisé en ce que** les temps d'ouverture de soupape dans la phase de vérification sont modifiés de telle sorte qu'au moins une soupape d'émission reste ouverte plus longtemps et/ou au moins une soupape d'admission est ouverte plus tard et/ou fermée plus tard, en particulier à l'aide d'une commande de soupape variable.

13. Procédé selon l'une quelconque des revendications précédentes, **caractérisé en ce que** la valeur réelle d'oxygène est déterminée à partir d'une mesure d'oxygène en amont et d'une mesure d'oxygène en aval du catalyseur d'oxydation NO (5), dans lequel il est prévu de préférence que la concentration en oxygène soit déterminée à l'aide d'un dispositif de détection (18) placé en aval du catalyseur d'oxydation NO (5).

14. Procédé selon l'une quelconque des revendications précédentes, **caractérisé en ce que** la valeur réelle d'oxygène est déterminée à partir de la modification et/ou de l'écart de la valeur d'oxygène détectée et/ou déterminée en aval du catalyseur d'oxydation NO (5) après l'augmentation de la concentration en monoxyde de carbone par rapport à la valeur d'oxygène détectée et/ou déterminée en aval du catalyseur d'oxydation NO (5) avant l'augmentation de la concentration en monoxyde de carbone, dans lequel il est prévu de préférence que la concentration en oxygène soit déterminée à l'aide d'un dispositif de détection (18) placé en aval du catalyseur d'oxydation NO.

15. Dispositif permettant d'effectuer un procédé de vérification de la capacité d'oxydation d'un catalyseur d'oxydation NO intégré dans la conduite de gaz d'échappement d'un moteur à combustion interne entraîné avec un excès d'air, **caractérisé en ce que**
un dispositif de commande (15) est prévu qui, pour vérifier la capacité d'oxydation du catalyseur d'oxydation NO (5), permet de lancer et/ou d'effectuer l'addition dosée et/ou la génération d'une quantité définie de monoxyde de carbone en tant que réducteur en amont du catalyseur d'oxydation NO (5) par la modification d'au moins un paramètre de fonctionnement défini du moteur à combustion interne, de sorte que les émissions de monoxyde de carbone du moteur à combustion interne sont augmentées par rapport à un réglage dans une phase sans vérification,
ce monoxyde de carbone est oxydé au niveau du catalyseur d'oxydation NO (5) à l'aide de l'oxygène contenu dans le courant de gaz d'échappement en amont du catalyseur d'oxydation NO (5),
au moins un dispositif de détection et/ou au moins un dispositif de calcul sont prévus, qui permettent de détecter et/ou de déterminer la modification de la teneur en oxygène dans le courant de gaz d'échappement, causée par l'oxydation du monoxyde de carbone additionné et/ou produit, à l'intérieur et/ou en aval du catalyseur d'oxydation NO (5) sous la forme d'une valeur réelle d'oxygène, et au moins un dispositif de comparaison est prévu qui permet de comparer la valeur réelle d'oxygène à une valeur théorique d'oxygène, dans lequel un écart défini de la valeur réelle d'oxygène par rapport à la valeur théorique d'oxygène permet de conclure à une capacité d'oxydation détériorée du catalyseur d'oxydation NO (5).

16. Dispositif selon la revendication 15, **caractérisé en ce qu'**un dispositif de stockage et/ou de sortie et/ou d'affichage sont prévus qui permettent de générer et/ou de sortir un message d'erreur en cas de manque de capacité d'oxydation détecté et/ou déterminé.
